# EUROPEAN PATENT APPLICATION

(11) **EP 4 317 661 A1**
(43) Date of publication of application: **07.02.2024**
(21) Application number: 23189035.1
(22) Date of filing: 01.08.2023
(51) Int. Cl.: F02C 6/08, F04D 27/02

(54) **POROUS COVER FOR A TAKEOFF PORT OF A GAS TURBINE ENGINE**

(30) Priority: 02.08.2022 US 202217879406
(71) Applicant: PRATT & WHITNEY CANADA CORP., Longueuil, Québec J4G 1A1 (CA)
(72) Inventor: MESLIOUI, Sid-Ali, (01BE5) Longueuil, J4G 1A1 (CA); CUNNINGHAM, Mark, (01BE5) Longueuil, J4G 1A1 (CA)
(74) Representative: Dehns

(57) **Abstract**

A system (20) is provided for a gas turbine engine. This engine system (20) includes a flowpath wall (30), a takeoff conduit (44) and a porous cover. The flowpath wall (30) forms a peripheral boundary of an internal engine flowpath (26). The flowpath wall (30) includes a takeoff port (36). The takeoff conduit (44) includes an internal conduit passage (52) fluidly coupled with the internal engine flowpath (26) through the takeoff port (36). The takeoff conduit (44) projects out from the flowpath wall (30). The porous cover for the internal conduit passage (52) is disposed at the takeoff port (36).

## Description

### TECHNICAL FIELD

This disclosure relates generally to a gas turbine engine and, more particularly, to a fluid system for the gas turbine engine with a takeoff port.

### BACKGROUND INFORMATION

A fluid system for a gas turbine engine may bleed air from a flowpath within the gas turbine engine for use with one or more components. Various types and configurations of engine fluid systems are known in the art. While these known engine fluid systems have various advantages, there is still room in the art for improvement.

### SUMMARY

According to an aspect of the present disclosure, a system is provided for a gas turbine engine. This engine system includes a flowpath wall, a takeoff conduit and a porous cover. The flowpath wall forms a peripheral boundary of an internal engine flowpath. The flowpath wall includes a takeoff port. The takeoff conduit includes an internal conduit passage fluidly coupled with the internal engine flowpath through the takeoff port. The takeoff conduit projects out from the flowpath wall. The porous cover for the internal conduit passage is disposed at the takeoff port.

According to another aspect of the present disclosure, another system is provided for a gas turbine engine. This engine system includes a flowpath wall, a takeoff conduit and a porous cover. The flowpath wall forms a peripheral boundary of an internal engine flowpath. The flowpath wall includes a takeoff port. The takeoff conduit includes an internal conduit passage fluidly coupled with the internal engine flowpath through the takeoff port. The porous cover extends across the takeoff port. The porous cover is configured from or otherwise includes mesh.

According to still another aspect of the present disclosure, another system is provided for a gas turbine engine. This engine system includes a flowpath wall, a takeoff conduit and a porous cover. The flowpath wall forms a peripheral boundary of an internal engine flowpath. The flowpath wall includes a takeoff port with a cross-sectional geometry having one of a circular shape or a non-circular shape with a minor axis dimension and a major axis dimension that is less than five times the minor axis dimension. The takeoff conduit includes an internal conduit passage fluidly coupled with the internal engine flowpath through the takeoff port. The porous cover for the internal conduit passage is disposed at the takeoff port.

The mesh may include wire with a diameter of between 0.030 inches and 0.040 inches. The mesh may also or alternatively include a percentage of open area between sixty percent and sixty-five percent.

The porous cover may be configured to alter a shear layer region of air flowing through the internal engine flowpath at the takeoff port.

The porous cover may be disposed within the takeoff port.

The porous cover may be disposed within the internal engine flowpath adjacent the takeoff port.

The porous cover may be disposed within the internal conduit passage adjacent the takeoff port.

The porous cover may extend across the takeoff port.

The porous cover may be configured as a single layer of porous material.

The porous cover may be configured as or otherwise include mesh.

The mesh may include a mesh element with a diameter of between 0.025 inches and 0.045 inches.

The porous cover may be configured as or otherwise include a perforated plate.

The porous cover may have a percentage of open area between thirty percent and forty-five percent.

The porous cover may have a percentage of open area between forty-five percent and sixty percent.

The porous cover may have a percentage of open area between sixty percent and seventy-five percent.

The takeoff port may have a cross-sectional geometry with a circular shape. The takeoff port may alternatively have a cross-sectional geometry with a non-circular shape with a first dimension and a second dimension angularly offset from the first dimension. The second dimension may be less than five times the first dimension.

The engine system may also include an engine component and a flow regulator. The flow regulator may be fluidly coupled between the internal conduit passage and the engine component. The flow regulator may be configured to regulate a flow of gas bled from the internal engine flowpath through the takeoff port and directed to the engine component.

The engine system may also include a gas turbine engine core. The internal engine flowpath may be configured as or otherwise include a bypass flowpath that bypasses the gas turbine engine core.

The engine system may also include a gas turbine engine core. The internal engine flowpath may be configured as or otherwise include a core flowpath that extends within the gas turbine engine core.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a sectional schematic illustration of a system for a gas turbine engine.
FIGS. 2A-C are illustrations of a takeoff port with various cross-sectional geometries.
FIGS. 3A-C are sectional schematic illustrations of a porous cover at various locations with the takeoff port.
FIG. 4 is a perspective illustration of a portion of the engine system with a mesh cover for the takeoff port.
FIG. 5 is a perspective illustration of a portion of the engine system with a perforated plate cover for the takeoff port.
FIG. 6 is a sectional schematic illustration of a gas turbine engine.

### DETAILED DESCRIPTION

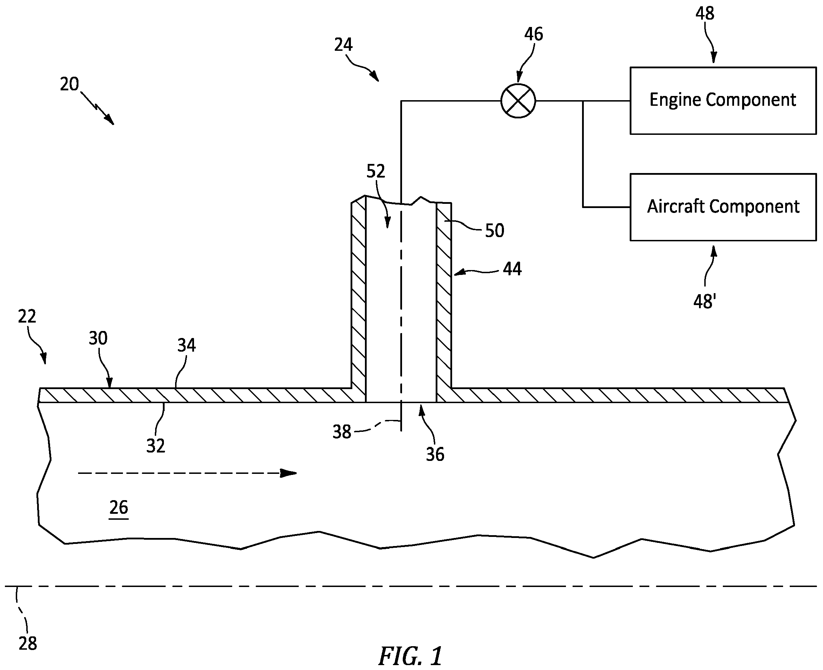

FIG. 1 illustrates a system 20 for a gas turbine engine. This engine system 20 may be part of a propulsion system for an aircraft, an auxiliary power unit (APU) for an aircraft, or a power generation system for a non-aircraft application. The engine system 20 of FIG. 1 includes a gas turbine engine structure 22 and a fluid system 24; e.g., a takeoff air system.

The engine structure 22 partially or completely forms an internal engine flowpath 26 within the gas turbine engine. This engine flowpath 26 extends longitudinally along a longitudinal centerline 28 within (e.g., through) the gas turbine engine and its engine structure 22, which longitudinal centerline 28 may also be a rotational axis for one or more rotating structures (e.g., spools) within the gas turbine engine. The engine flowpath 26 may extend circumferentially about (e.g., completely around) the longitudinal centerline 28 providing the engine flowpath 26 with, for example, an annular cross-sectional geometry. Examples of the engine flowpath 26 include, but are not limited to, a bypass flowpath which bypasses a core of the gas turbine engine, and a core flowpath which extends within (e.g., through) the gas turbine engine core.

The engine structure 22 includes a flowpath wall 30 such as, but not limited to, a duct wall, an engine casing, a shroud, a platform or a liner. The flowpath wall 30 forms a peripheral boundary of the engine flowpath 26 within the gas turbine engine and its engine structure 22. The peripheral boundary of FIG. 1 is an outer peripheral boundary of the engine flowpath 26. The flowpath wall 30, however, may also or alternatively form an inner peripheral boundary of the engine flowpath 26 and/or a side peripheral boundary of the engine flowpath 26. The flowpath wall 30 of FIG. 1 extends vertically (e.g., radially relative to the longitudinal centerline 28) between and to an interior side 32 of the flowpath wall 30 and an exterior side 34 of the flowpath wall 30. The flowpath wall 30 may extend circumferentially about (e.g., completely around) the longitudinal centerline 28 providing the flowpath wall 30 with, for example, a tubular geometry.

The flowpath wall 30 includes a takeoff port 36 such as an air bleed port or any other through-aperture. This takeoff port 36 is disposed (e.g., intermediately) along a longitudinal length of the engine flowpath 26. The takeoff port 36 extends vertically through the flowpath wall 30 (e.g., along a centerline 38 of the takeoff port 36) between and to the wall interior side 32 and the wall exterior side 34. The takeoff port 36 is thereby vertically adjacent and fluidly coupled with the engine flowpath 26.

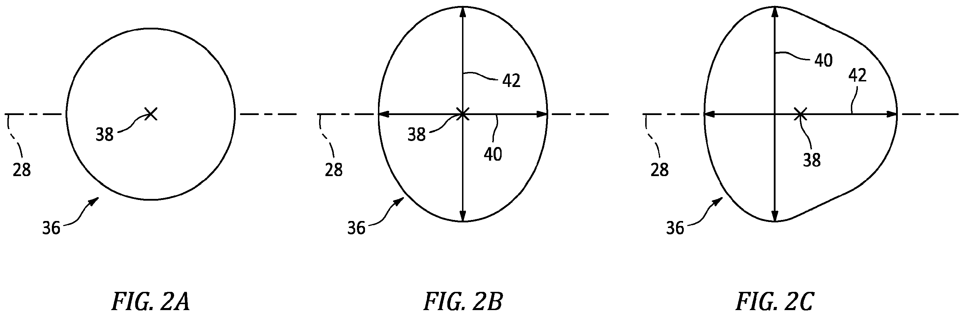

Referring to FIGS. 2A-C, the takeoff port 36 has a cross-sectional geometry when viewed in a reference plane, for example, perpendicular to the port centerline 38 and/or tangent to the flowpath wall 30 at the takeoff port 36 (see FIG. 1). Referring to FIG. 2A, the cross-sectional geometry of the takeoff port 36 may have a circular shape. Referring to FIGS. 2B and 2C, the cross-sectional geometry of the takeoff port 36 may alternatively have a non-circular shape. This non-circular shape may have a first (e.g., minor axis) dimension 40 and a second (e.g., major axis) dimension 42, where the first dimension 40 of FIGS. 2B and 2C is angularly offset from (e.g., perpendicular to) the second dimension 42. The second dimension 42 is greater than the first dimension 40, but may be less than ten times (10x), five times (5x) or two times (2x) the first dimension 40. The present disclosure, however, is not limited to such an exemplary dimension relationship. Examples of the non-circular shape include, but are not limited to, an oval shape (e.g., see FIG. 2B) and a scoop shape (e.g., see FIG. 2C).

The fluid system 24 of FIG. 1 includes a takeoff conduit 44 (e.g., an air bleed conduit), a flow regulator 46 (e.g., a valve) and at least one component 48 of the gas turbine engine and/or at least one component 48' of the aircraft. Examples of the engine component 48 include, but are not limited to, a heat exchanger (e.g., a precooler) for the gas turbine engine, an active clearance control (ACC) system for the gas turbine engine, a pneumatic actuator, or any other component of the gas turbine engine which may utilize gas flow (e.g., air flow) bled from the engine flowpath 26 during gas turbine engine operation. An example of the aircraft component 48' is, but is not limited to, an aircraft cabin environment (e.g., HVAC) system. The fluid system 24 of FIG. 1 is configured to selectively takeoff (e.g., bleed) gas flowing through the engine flowpath 26 and deliver that takeoff gas (e.g., bleed air) to the engine component 48.

The takeoff conduit 44 has a tubular sidewall 50 that forms an internal conduit passage 52 (e.g., an inner bore) within the takeoff conduit 44. This conduit passage 52 is fluidly coupled with the takeoff port 36. The conduit passage 52 is thereby fluidly coupled with the engine flowpath 26 through the takeoff port 36. The takeoff conduit 44 and its sidewall 50 project (e.g., vertically) out from the flowpath wall 30. The takeoff conduit 44 and its sidewall 50 may also be formed integral with or otherwise connected (e.g., mechanically fastened, bonded, etc.) to the flowpath wall 30. The conduit passage 52 may thereby be disposed adjacent the takeoff port 36, for example, without any other volumes (e.g., a plenum, etc.) between the conduit passage 52 and the takeoff port 36. The takeoff port 36, for example, may form an inlet to / of the conduit passage 52. The present disclosure, however, is not limited to such an exemplary relationship / fluid coupling between the takeoff port 36 and the conduit passage 52.

The flow regulator 46 is fluidly coupled with and (e.g., inline) between the takeoff conduit 44 and its conduit passage 52 and the engine component 48. The flow regulator 46 is configured to regulate a flow of the takeoff gas directed (e.g., bled) out of the engine flowpath 26 through the takeoff port 36 and directed to the engine component 48. During a first mode of operation, the flow regulator 46 may close and thereby fluidly decouple the conduit passage 52 from the engine component 48. During a second mode of operation, the flow regulator 46 may open and thereby fluidly couple the conduit passage 52 with the engine component 48.

During the first mode of operation when the flow regulator 46 closes and fluidly decouples the conduit passage 52 from the engine component 48, the conduit passage 52 may become a closed-ended passage; e.g., a blind passage, a deadheaded passage, etc. Under certain conditions, this closed-ended passage may operate as an acoustic resonance chamber. For example, while the takeoff gas may no longer flow through the conduit passage 52 to the engine component 48, the gas flowing within the engine flowpath 26 still flows across the open takeoff port 36. The gas flow across the takeoff port 36 may be a source for flow instabilities. These flow instabilities may excite an intake structure (e.g., an adjacent portion of the flowpath wall 30, the takeoff conduit 44, etc.) causing vibrations and/or sound; e.g., noise. The vibrations and/or the sound may result from a self-sustained flow oscillation at the takeoff port 36 (e.g., the inlet to the conduit passage 52) where a dominant vortex mode may lock onto intake structure modes and/or acoustic mode - resonance. As an analogy, consider a whistling sound generated by directing an airflow across an opening of an empty bottle.

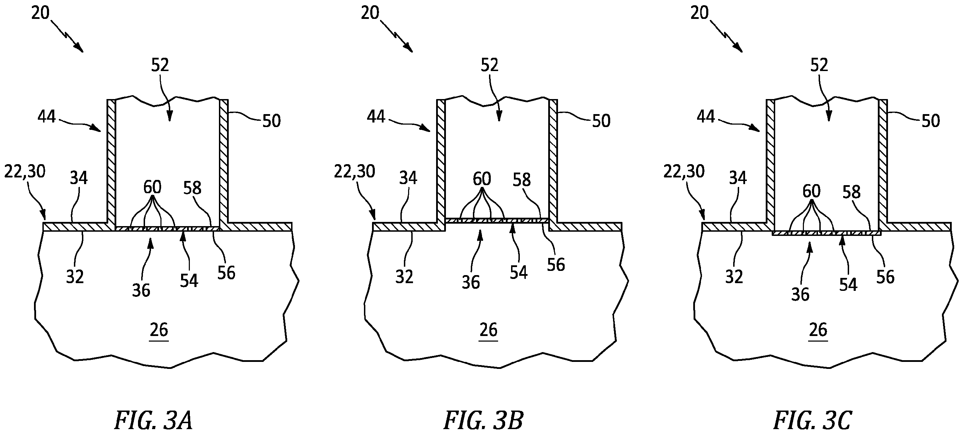

Referring to FIGS. 3A-C, to disrupt the generation of the vibrations and/or the sound, the engine system 20 includes a gas porous cover 54 for the conduit passage 52 disposed at (e.g., on, adjacent or proximate) the takeoff port 36. This porous cover 54 is configured to alter a shear layer region of the gas flowing through the engine flowpath 26 at, above and along the takeoff port 36. The shear layer region alteration may attenuate (e.g., reduce or eliminate) self-sustained flow oscillations that may cause generation of the vibrations and/or the sound.

The porous cover 54 of FIGS. 3A-C extends across the takeoff port 36 and/or the conduit passage 52. The porous cover 54 may thereby completely (or partially) longitudinally and/or circumferentially cover (e.g., overlap) the takeoff port 36 and/or the conduit passage 52. With such an arrangement, for the gas to enter the takeoff port 36 and/or the conduit passage 52 of FIGS. 3A-C from the engine flowpath 26, the gas (e.g., must) flow through the porous cover 54. The porous cover 54 may also functionally form a segment of the peripheral boundary of the engine flowpath 26, for example, during the first mode of operation when the flow regulator 46 of FIG. 1 closes and fluidly decouples the conduit passage 52 from the engine component 48.

In some embodiments, referring to FIG. 3A, the porous cover 54 may be disposed within the takeoff port 36 in the flowpath wall 30. The porous cover 54, for example, may be vertically aligned with the flowpath wall 30. In other embodiments, referring to FIG. 3B, the porous cover 54 may be disposed within the conduit passage 52 adjacent the takeoff port 36. The porous cover 54, for example, may be slightly vertically offset (e.g., outward, externally) from the flowpath wall 30. In still other embodiments, referring to FIG. 3C, the porous cover 54 may be disposed within the engine flowpath 26 adjacent the takeoff port 36. The porous cover 54, for example, may be slightly vertically offset (e.g., inward, internally) from the flowpath wall 30.

Referring to FIGS. 3A-C, the porous cover 54 may be configured as a single layer of gas porous material. This layer of material extends vertically between and to an interior side 56 of the porous cover 54 and an exterior side 58 of the porous cover 54. The cover interior side 56 is adjacent the engine flowpath 26, and contacts the gas flowing within the engine flowpath 26. The cover exterior side 58 is adjacent the conduit passage 52, and contacts the gas within the conduit passage 52.

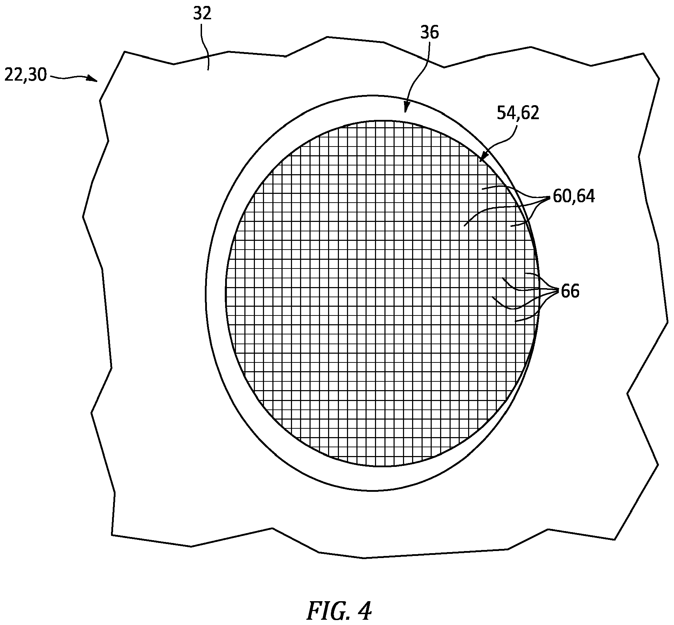

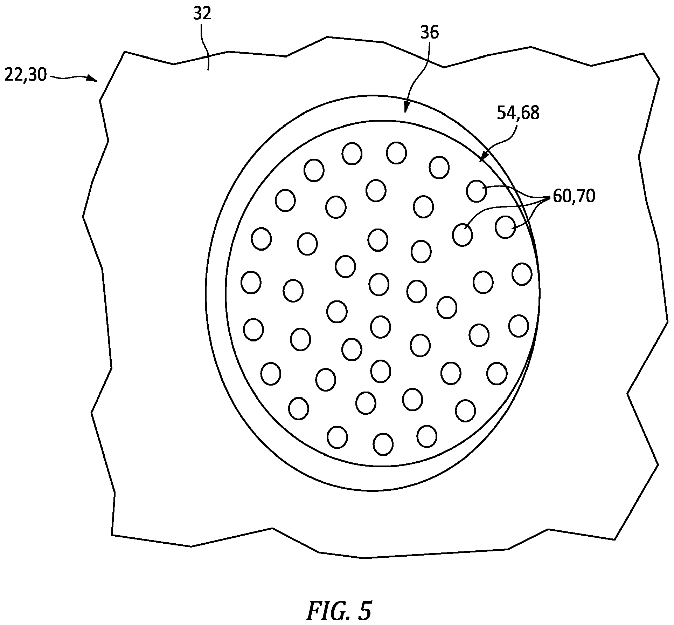

The porous cover 54 includes a plurality of pores 60 such as perforations and/or any other apertures. Each of the pores 60 may extend vertically through the porous cover 54 and its layer of material from the cover interior side 56 to the cover exterior side 58. For example, referring to FIG. 4, the porous cover 54 may be configured as or otherwise include a layer of mesh 62, where interstices 64 between woven elements 66 (e.g., wires) of the mesh 62 form the pores 60. Here, one or more or all of the mesh elements 66 may each have a diameter of between 0.025 inches (-0.0635 centimeters) and 0.045 inches (~ 0.1143 centimeters); e.g., exactly or about 0.035 inches (-0.0889 centimeters). The present disclosure, however, is not limited to such exemplary mesh element dimensions. In another example, referring to FIG. 5, the porous cover 54 may be configured as or otherwise include a perforated plate 68, where perforations 70 through the plate form the pores 60.

A quantity of the pores 60, dimensions of the pores 60 and/or a density of the pores 60 are selected to provide the porous cover 54 with a percentage of open area (POA). This percentage of open area may describe a ratio between a total cross-sectional area of all of the pores 60 to a total cross-sectional area of the porous cover 54. The percentage of open area of the porous cover 54 (e.g., the mesh cover or the perforated plate cover) may be between thirty percent (30%) and forty-five percent (45%), between forty-five percent (45%) and sixty percent (60%), or between sixty percent (60%) and seventy-five percent (75%). In particular, where the porous cover 54 comprises the mesh 62 (e.g., with a mesh element diameter of between 0.030 inches (-0.0762 centimeters) and 0.040 inches (-0.1016 centimeters)), the percentage of open area may be between sixty percent (60%) and sixty-five percent (65%); e.g., exactly or about sixty-three percent (63%). The present disclosure, however, is not limited to such exemplary arrangements.

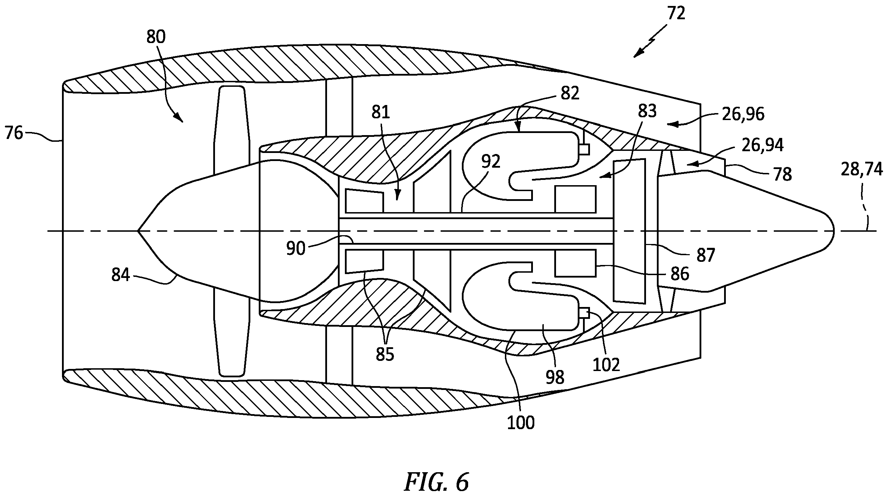

FIG. 6 illustrates an example of the gas turbine engine which may include the engine system 20 described above. This gas turbine engine of FIG. 6 is configured as a turbofan gas turbine engine 72. The gas turbine engine 72 of FIG. 6 extends along an axial centerline 74 of the gas turbine engine 72 between an upstream airflow inlet 76 and a downstream airflow exhaust 78, which axial centerline 74 may be parallel with (e.g., coaxial with) the longitudinal centerline 28. The gas turbine engine 72 includes a fan section 80, a compressor section 81, a combustor section 82 and a turbine section 83.

The fan section 80 includes a fan rotor 84. The compressor section 81 includes a compressor rotor 85. The turbine section 83 includes a high pressure turbine (HPT) rotor 86 and a low pressure turbine (LPT) rotor 87, where the LPT rotor 87 is configured as a power turbine rotor. Each of these rotors 84-87 includes a plurality of rotor blades arranged circumferentially around and connected to one or more respective rotor disks.

The fan rotor 84 is connected to the LPT rotor 87 through a low speed shaft 90. The compressor rotor 85 is connected to the HPT rotor 86 through a high speed shaft 92. The low speed shaft 90 extends through a bore of the high speed shaft 92 between the fan rotor 84 and the LPT rotor 87.

During operation, air enters the gas turbine engine 72 through the airflow inlet 76. This air is directed through the fan section 80 and into a core flowpath 94 and a bypass flowpath 96, where either the core flowpath 94 or the bypass flowpath 96 may be or otherwise include the engine flowpath 26. The core flowpath 94 extends sequentially through the engine sections 81-83; e.g., a core of the gas turbine engine 72. The air within the core flowpath 94 may be referred to as "core air". The bypass flowpath 96 extends through a bypass duct, which bypasses the engine core. The air within the bypass flowpath 96 may be referred to as "bypass air".

The core air is compressed by the compressor rotor 85 and directed into a (e.g., annular) combustion chamber 98 of a (e.g., annular) combustor 100 in the combustor section 82. Fuel is injected into the combustion chamber 98 via one or more of the fuel injectors 102 and mixed with the compressed core air to provide a fuel-air mixture. This fuel-air mixture is ignited and combustion products thereof flow through and sequentially cause the HPT rotor 86 and the LPT rotor 87 to rotate. The rotation of the HPT rotor 86 drives rotation of the compressor rotor 85 and, thus, compression of air received from an inlet into the core flowpath 94. The rotation of the LPT rotor 87 drives rotation of the fan rotor 84, which propels bypass air through and out of the bypass flowpath 96. The propulsion of the bypass air may account for a significant portion (e.g., a majority) of thrust generated by the turbine engine.

The engine system 20 may be configured with various gas turbine engines other than the one described above. The engine system 20, for example, may be configured with a geared gas turbine engine where a geartrain connects one or more shafts to one or more rotors in a fan section, a compressor section and/or any other engine section. Alternatively, the engine system 20 may be configured with a gas turbine engine configured without a geartrain. The engine system 20 may be configured with a geared or non-geared gas turbine engine configured with a single spool, with two spools (e.g., see FIG. 6), or with more than two spools. The gas turbine engine may be configured as a turbofan gas turbine engine, a turbojet gas turbine engine, a turboprop gas turbine engine, a turboshaft gas turbine engine or any other type of aircraft propulsion system gas turbine engine. The gas turbine engine, however, is not limited to propulsion system nor aircraft applications as described above.

While various embodiments of the present disclosure have been described, it will be apparent to those of ordinary skill in the art that many more embodiments and implementations are possible within the scope of the disclosure. For example, the present disclosure as described herein includes several aspects and embodiments that include particular features. Although these features may be described individually, it is within the scope of the present disclosure that some or all of these features may be combined with any one of the aspects and remain within the scope of the disclosure. Accordingly, the present disclosure is not to be restricted except in light of the attached claims and their equivalents.

## Claims

1. A system (20) for a gas turbine engine (72), comprising:
a flowpath wall (30) forming a peripheral boundary of an internal engine flowpath (26), the flowpath wall (30) comprising a takeoff port (36);
a takeoff conduit (44) comprising an internal conduit passage (52) fluidly coupled with the internal engine flowpath (26) through the takeoff port (36), the takeoff conduit (44) projecting out from the flowpath wall (30); and
a porous cover (54) for the internal conduit passage (52) disposed at the takeoff port (36).

2. The system of claim 1, wherein the porous cover (54) is configured to alter a shear layer region of air flowing through the internal engine flowpath (26) at the takeoff port (36).

3. The system of claim 1 or 2, wherein the porous cover (54) is disposed within the takeoff port (36).

4. The system of claim 1 or 2, wherein the porous cover (54) is disposed within the internal engine flowpath (26) adjacent the takeoff port (36).

5. The system of claim 1 or 2, wherein the porous cover (54) is disposed within the internal conduit passage (52) adjacent the takeoff port (36).

6. The system of any preceding claim, wherein the porous cover (54) extends across the takeoff port (36).

7. The system of any preceding claim, wherein the porous cover (54) is configured as a single layer of porous material.

8. The system of any preceding claims 1 to 6, wherein the porous cover (54) comprises mesh (62), wherein the mesh (62) optionally comprises a mesh element (66) with a diameter of between 0.635 mm (0.025 inches) and 1.143 mm (0.045 inches).

9. The system of any of claims 1 to 7, wherein the porous cover (54) comprises a perforated plate (68).

10. The system of any preceding claim, wherein the porous cover (54) has a percentage of open area between thirty percent and forty-five percent; or between forty-five percent and sixty percent; or between sixty percent and seventy-five percent.

11. The system of any preceding claim, wherein the takeoff port (36) has a cross-sectional geometry with one of
a circular shape; or
a non-circular shape with a first dimension (40) and a second dimension (42) angularly offset from the first dimension (40), and the second dimension (42) is less than five times the first dimension (40).

12. The system of any preceding claim, further comprising:
an engine component (48; 48'); and
a flow regulator (46) fluidly coupled between the internal conduit passage (52) and the engine component (48; 48'), the flow regulator (46) configured to regulate a flow of gas bled from the internal engine flowpath (26) through the takeoff port (36) and directed to the engine component (48; 48').

13. The system of any preceding claim, further comprising:
a gas turbine engine core,
wherein the internal engine flowpath (26) comprises:
a bypass flowpath (96) that bypasses the gas turbine engine core; and/or
a core flowpath (94) that extends within the gas turbine engine core.

14. A system (20) for a gas turbine engine (72), comprising:
a flowpath wall (30) forming a peripheral boundary of an internal engine flowpath (26), the flowpath wall (30) comprising a takeoff port (36);
a takeoff conduit (44) comprising an internal conduit passage (52) fluidly coupled with the internal engine flowpath (26) through the takeoff port (36); and
a porous cover (54) extending across the takeoff port (36), the porous cover (54) comprising mesh (62), wherein, optionally, the mesh (62) comprises
wire (66) with a diameter of between 0.762 mm (0.030 inches) and 1.016 mm (0.040 inches); and
a percentage of open area between sixty percent and sixty-five percent.

15. A system (20) for a gas turbine engine (72), comprising:
a flowpath wall (30) forming a peripheral boundary of an internal engine flowpath (26), the flowpath wall (30) comprising a takeoff port (36) with a cross-sectional geometry having one of a circular shape or a non-circular shape with a minor axis dimension (40) and a major axis dimension (42) that is less than five times the minor axis dimension (40);
a takeoff conduit (44) comprising an internal conduit passage (52) fluidly coupled with the internal engine flowpath (26) through the takeoff port (36); and
a porous cover (52) for the internal conduit passage (52) disposed at the takeoff port (36).
